Europäisches Patentamt

European Patent Office

Office européen des brevets

(11) Veröffentlichungsnummer: **0 544 729 B1**

(12) **EUROPÄISCHE PATENTSCHRIFT**

(45) Veröffentlichungstag der Patentschrift: **19.07.95**

(51) Int. Cl.6: **B01D 53/72**, B01D 53/75, B01D 53/96, B01D 53/14, F02C 3/30, C07C 67/39, C07C 69/82

(21) Anmeldenummer: **91914773.6**

(22) Anmeldetag: **20.08.91**

(86) Internationale Anmeldenummer: **PCT/EP91/01577**

(87) Internationale Veröffentlichungsnummer: **WO 92/03213 (05.03.92 92/06)**

(54) **VERFAHREN ZUR REINIGUNG EINES OXIDATIONSABGASES.**

(30) Priorität: **24.08.90 DE 4026733**

(43) Veröffentlichungstag der Anmeldung:
**09.06.93 Patentblatt 93/23**

(45) Bekanntmachung des Hinweises auf die Patenterteilung:
**19.07.95 Patentblatt 95/29**

(84) Benannte Vertragsstaaten:
**BE DE ES FR GB IT NL**

(56) Entgegenhaltungen:
EP-A- 0 190 649     EP-A- 0 222 158
DE-A- 2 759 208     DE-C- 3 440 650
GB-A- 2 097 476     US-A- 4 102 983

Ullmanns Encyklopädie der Technischen Chemie, 4.Aufl,1982,Bd.22, S.531-2 und 524

(73) Patentinhaber: **HÜLS AKTIENGESELLSCHAFT**

**D-45764 Marl (DE)**

(72) Erfinder: **MODIC, Rudolf**
**Brunnenplatz 4**
**D-3074 Steyerberg (DE)**
Erfinder: **KORTE, Hermann-Josef**
**Herder-Strasse 14**
**D-4358 Haltern (DE)**
Erfinder: **SCHOENGEN, Anton**
**In den Espeln 9**
**D-5810 Witten (DE)**
Erfinder: **SCHROEDER, Johann-Heinrich**
**Ortli 6**
**D-4600 Dortmund (DE)**
Erfinder: **PORSCHEN, Jörg**
**Merzenicher Str. 154**
**D-5160 Düren (DE)**

**Beschreibung**

**Technisches Gebiet**

Die Erfindung betrifft ein verfahren zur Reinigung eines zumindest mit Xylol belasteten Abgases, wobei das Verfahren - ggf. neben weiteren Verfahrensschritten - zumindest eine Abgaswäsche umfaßt. Das Abgas ist mit Xylol und ggf. auch mit anderen aromatischen und ggf. aliphatischen Substanzen belastet. Das zu reinigende Abgas stammt aus einer bei einem Druck von 5 bis 50 bar betriebenen Oxidation von Xylol mit sauerstoffhaltigem Gas, z.B. aus der Luftoxidation von para-Xylol (p-X) nach dem sogenannten Witten-DMT-Verfahren zur Herstellung von Dimethylterephthalat (DMT).

Nach dem Witten-DMT-Verfahren wird ein Gemisch aus p-X und para-Toluylsäure-methylester (p-TE) in der flüssigen Phase in Abwesenheit von prozeßfremden Lösungsmitteln und von Halogenverbindungen bei einem Druck von etwa 4 bis 8 bar und einer Temperatur von etwa 140 bis 180 °C mit Luftsauerstoff in Gegenwart von gelösten Schwermetalloxidationskatalysatoren oxidiert, z.B. in Gegenwart eines Gemisches von Kobalt- und Mangan-Verbindungen (vgl. DE-C-20 10 137).

Bei diesem industriell im großen Umfang ausgeübten Verfahren wird bei der Oxidation mit Luftsauerstoff ein Abgas erzeugt, das in Abhängigkeit vom Oxidationsdruck und der Temperatur sowie den physikalischen Stoffdaten typisch mit folgenden Fraktionen gesättigt ist:

a) 0,4 bis 0,6 Gew.-% einer höhersiedenden Fraktion aus DMT, Monomethylterephthalat (MMT), Terephthalaldehydsäure-methylester (TAE), para-Toluylsäure (p-TA) und Terephthalsäure (TPA). Einige dieser Produkte bilden bei der Abkühlung hochschmelzende Sublimate, soweit sie nicht in den anderen Komponenten gelöst sind;

b) 14 bis 22 Gew.-% einer mittelsiedenden wasserunlöslichen Fraktion aus Produkten wie p-TE, Benzoesäuremethylester (BME) und p-X;

c) 7 bis 10 Gew.-% einer mittelsiedenden Fraktion aus wasserlöslichen Produkten wie Essigsäure, Ameisensäure, Reaktionswasser und Methanol;

d) 0,2 bis 0,3 Gew.-% von Leichtsiedern wie Methylacetat, Methylformiat, Acetaldehyd, Formaldehyd, Dimethylether u. ä.

Das Trägerabgas für die obigen Stoffe besteht aus:

e) dem Luftstickstoff;

f) einem Restsauerstoffgehalt von 0,5 bis 3 Gew.-% (bei Erreichung der Explosionsgrenzen von 6 bis 8 Gew.-%);

g) den Reaktionsnebenprodukten $CO_2$ mit 1 bis 3 Gew.-%, sowie CO mit 0,3 bis 2,0 Gew.-%.

Aus ökonomischer Sicht werden oben erwähnte Stoffe in sogenannte Wertprodukte und Abfallstoffe eingeteilt. Die Wertprodukte werden in den Gesamtprozeß zurückgeführt.

Die Abfallstoffe müssen möglichst umweltschonend entsorgt werden. Zu diesen Abfallstoffen gehören u. a. CO sowie die Leichtsieder Acetaldehyd, Formaldehyd, Dimethylether sowie Essigsäure und Ameisensäure.

Bei den Wertprodukten können wasserlösliche wie Methanol sowie wasserunlösliche wie p-X, DMT, p-TE usw. unterschieden werden.

**Stand der Technik**

Bezüglich des "Witten-DMT-Verfahrens" (Katzschmann-Verfahren) wird auf die DE-C-10 41 945, DE-C-12 99 627, DE-A-20 14 012, DE-C-22 44 662, DE-C-24 27 875, DE-C-29 16 197, DE-C-30 11 858, DE-C-30 37 045, DE-C-30 44 617, EP-B-0 053 241, DE-C-31 51 383, EP-B-0 156 133, EP-B-0 157 122, DE-C-34 40 650, WO-A-90/09367 sowie Hydrocarbon Processing, November 1983, S. 91, verwiesen. Soweit in der vorliegenden Beschreibung auf den Gesamtprozeß verwiesen wird, wird auf diese Schriften bezug genommen.

Das Abgas aus der Oxidation nach dem Witten-DMT-Verfahren wird üblicherweise mehrstufig abgekühlt, wobei die höher- und mittelsiedenden Komponenten schrittweise weitgehend auskondensieren. Nach einer Wäsche mit kaltem Wasser wird der Abgasstrom in einer Aktivkohle-Adsorption von restlichen organischen Bestandteilen weitgehend befreit (Ullmann, 4. Auflage 1982, Band 22, Seite 529 ff, insbesondere S. 532, linke Spalte; DE-C-34 40 650; DE-A-24 61 092).

Eine ähnliche Abgasreinigung mit Abkühlung und anschließender Wasser-Wäsche ist für die Oxidationabgase nach dem sogenannten AMOCO-Verfahren bekannt (Ullmann, 4. Auflage 1982, Band 22, Seite 519 ff, insbesondere S. 524, rechte Spalte).

Diese Abgasreinigung hat den Nachteil, daß die Adsorptionsstufe (Aktivkohle-Anlage) nur diskontinuierlich betrieben werden kann, daß die Aufbereitung des Aktivkohle-Desorbats aufwendig ist und daß die Ausnutzung der im Abgas enthaltenen Energien nur begrenzt möglich ist. Schließlich ist es mit einer Aktivkohle-Adsorption nicht möglich, das im Abgas enthaltene CO zu entfernen.

Die US-A-4 102 983 Offenbart die Wäsche von Abgasen unter Druck. Als mögliche Absorptionsmittel sind unter anderen hochsiedende Ester erwähnt. Gereinigt werden Mischungen aus Luft und flüchtigen organischen Verbindungen, welche bei Lagerung bzw. Transport der letzteren entstehen.

Aus der GB-A-2 097 476 (= DE-A1-32 15 437) ist ein Verfahren zur Nutzung der mechanischen Energie eines Rückstandsgases bekannt, bei dem das Rückstandsgas zur Kühlung einer Gasturbine mit anschließender Mischung mit der Verbrennungsluft verwendet wird. Eine Verbrennung des Rückstandsgases ist dabei weder vorgesehen noch möglich.

Aus der EP-A-0 190 649 ist ein Verfahren zur Abtrennung von flüchtigen Schadstoffen aus einer Abluft durch eine Gegenstromwäsche mit einem niedrigviskosen Esteröl bekannt. Diese Schrift enthält allerdings keine Hinweise auf den Druck bei der Absorption, den Siedepunkt der Waschflüssigkeit und die Eignung einer solchen Absorption zur Reinigung eines Abgases einer Xylol-Luftoxidation.

**Aufgabe**

Aufgabe der vorliegenden Erfindung ist es daher, zumindest das im Abgas enthaltene Xylol unter Druck kontinuierlich und möglichst weitgehend zu entfernen.

Ein weiteres Anliegen der Erfindung (Gegenstand der Unteransprüche) ist es, die im Abgas enthaltene Energie (Druck, Temperatur, oxidierbare Produkte) möglichst weitgehend zu nutzen. Schließlich ist es ein weiteres Anliegen der Erfindung, den CO-Anteil im Abgas zu minimieren.

**Darstellung der Erfindung**

Die Erfindung löst die erstgenannte Aufgabe durch ein Verfahren mit den Merkmalen des Anspruchs 1.

Bei der bevorzugten Anwendung des erfindungsgemäßen Verfahrens zur Reinigung des Oxidationsabgases aus einer Luftoxidation von p-X kann der Absorption bevorzugt eine (Teil)-Kondensation vorgeschaltet werden, insbesondere bei einer Temperatur von 35 bis 60 °C, bevorzugt bei etwa 40 °C. Durch Abscheidung des Kondensats kann der größte Teil der mittel- und hochsiedenden organischen Bestandteile des Abgases (p-TE, DMT, BME) sowie des p-Xylols und Methanols aus dem Abgas entfernt werden. Die (Teil-) Kondensation kann auch in einer Kondensationswäsche erfolgen.

Der übrige Abgasstrom enthält als Wertprodukte überwiegend p-X und Methanol. Das p-X wird in der erfindungsgemäßen Absorption entfernt, wobei die Absorption bevorzugt mehrstufig ausgeführt wird. In der ersten Absorptionsstufe besteht das Absorptionsmittel (Lösungsmittel) überwiegend aus p-TE. Das p-X des Abgases wird in dem p-TE bis auf Spuren gelöst und mit diesem ausgewaschen. Das vom p-X befreite und mit dem Lösungsmittel (p-TE) der ersten Absorptionsstufe angereicherte Abgas wird nach einer bevorzugten Ausführung der Erfindung in einer zweiten Absorptionsstufe mit einem weiteren, bevorzugt niedriger siedenden Lösungsmittel, das insbesondere überwiegend aus BME und/oder Methanol besteht, im Gegenstrom gewaschen. Das sich dabei bevorzugt auf 20 bis 30 °C abkühlende Abgas wird in dieser zweiten Absorptionsstufe vor allem von dem Lösungsmittel der ersten Stufe (p-TE) befreit und enthält anschließend fast ausschließlich Methanol als Wertprodukt.

Das noch im Abgas enthaltene Methanol wird bevorzugt in einer weiteren Wäsche mit Wasser absorbiert, wobei die Temperatur aus energetischen Gründen etwa 10 bis 20 °C, bevorzugt ca. 15 °C beträgt. Nach dieser dritten Absorptionsstufe enthält das Abgas nur noch Spuren an Wertprodukten.

Für dieses Verfahren ist es besonders günstig, als Absorptionsmittel für Methanol vorzugsweise ein mit destillablen Abfallstoffen (z.B. Essigsäure, Ameisensäure, Formaldehyd u.s.w.) angereichertes, aber wertstofffreies Prozeßabwasser zu wählen. Der dabei in den Abgasstrom übernommene dampfförmige Anteil des Abwassers kann dann sehr günstig durch eine nachfolgende Verbrennung entsorgt werden. Selbst wenn eine Methanolabsorption unnötig ist, ist es sehr günstig, das vorher durch die erwähnte Kondensation von Wertprodukten befreite und dabei gleichzeitig ganz oder teilweise getrocknete Abgas mit durch Abfallwärme erzielten Abwasserbrüden mit den darin enthaltenen destillablen Abfallstoffen zu sättigen.

Die noch enthaltenen brennbaren Bestandteile, insbesondere CO und zum Teil aus dem Waschwasser stammende organische Produkte wie Essigsäure, Ameisensäure sowie die nicht absorptiv entfernten Bestandteile des Abgases können nach einer besonders bevorzugten Ausführung der Erfindung durch Verbrennung, insbesondere unter Druck, zur Aufheizung des Abgases verwendet werden, wobei die mechanische bzw. thermische Energie in einer Entspannungsturbine genutzt werden kann. Dem Abgas kann vor der Verbrennung zusätzlich Sauerstoff (Luft) und ein Brennstoff zugeführt werden, um eine energetisch sinnvolle Nutzung mit höherem Wirkungsgrad zu erreichen. Es ist jedoch auch möglich, die oxidierbaren Bestandteile katalytisch zu verbrennen.

In einer bevorzugten Ausführungsform der Erfindung wird das Abgas nach der letzten Absorptionsstufe zunächst im Gegenstrom mit dem Oxidationsabgas aufgeheizt und anschließend mit einem Prozeßabwasser gesättigt, das mit organischen Abfallstoffen belastet ist. Das Abwasser kann dabei mit Abwärme aus dem Prozeß verdampft werden. Auf diese Weise kann ein Teil des Prozeßabwassers in energetisch besonders günstiger Weise entsorgt werden.

Mit diesem bevorzugten Verfahren ist es in überraschend einfacher Weise möglich, eine vollständige Reinigung des Abgases aus mit sauerstoffhaltigem Gas betriebenen Oxidationsprozessen zu erreichen, wobei die im Abgas enthaltene Energie (thermisch, stofflich und mechanisch) weitgehend zurückgewonnen werden kann.

## Kurze Beschreibung der Zeichnung

Die Erfindung wird im folgenden anhand eines Ausführungsbeispiels sowie der Zeichnung näher erläutert. Es zeigen dabei als Anlagenschemen

Fig. 1      eine erfindungsgemäße Abgas-Reinigungsanlage

Fig. 2      eine nachgeschaltete Energierückgewinnungsanlage

Fig. 3      eine alternative Abgas-Reinigungsanlage ähnlich Fig.1

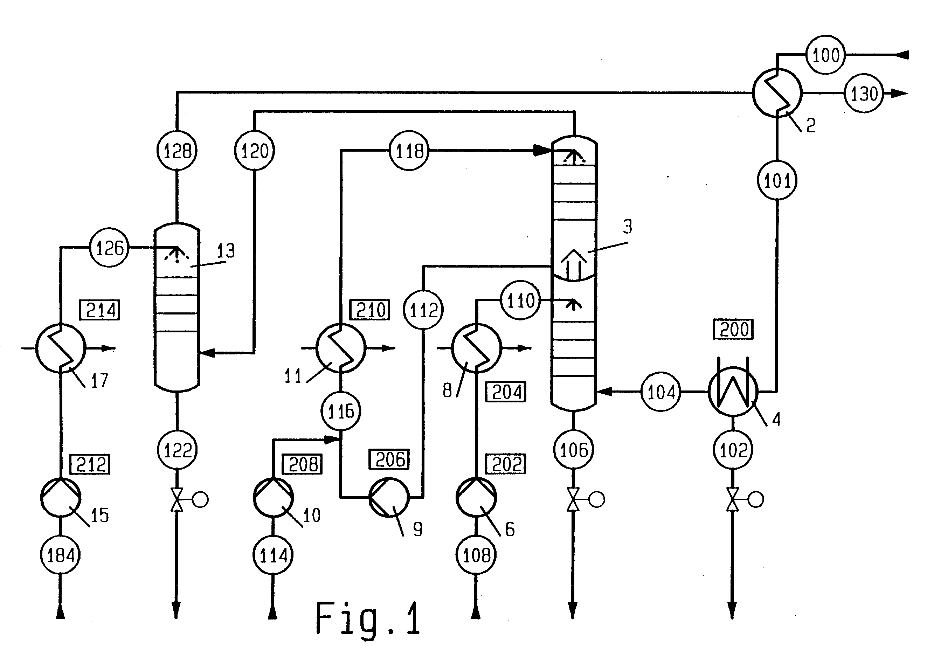

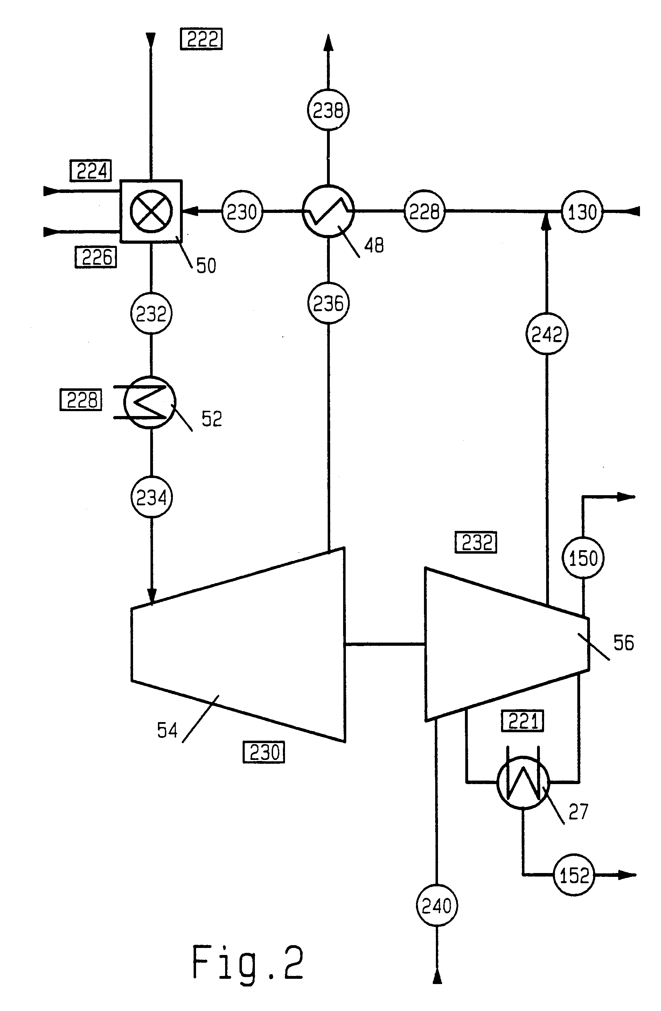

Die in den Fig. 1 und 2 angegebenen Stoffströme 100 bis 242 (eingekreist) sind in Tabelle 1 spezifiziert. In Tabelle 2 sind die Energieströme 200 bis 232 (in den Fig. mit rechteckiger Umrandung gekennzeichnet) bilanziert.

## Bester Weg zur Ausführung der Erfindung

### Beispiel 1

In einer Anlage zur Herstellung von Terephthalsäure (TPA) aus DMT als Zwischenprodukt, entsprechend der DE-C2-3 044 617, mit einer Kapazität von 250.000 Jahrestonnen fallen ca. 93.000 kg/h Abgase aus der Oxidation an, die in einer Abgasaufbereitung entsprechend den Fig. 1 und 2 gereinigt werden.

Neben dem Oxidationsabgas werden dabei folgende Stoffströme aus dem Gesamtprozeß entnommen:

Stoffstrom 108,      eine überwiegend p-TE enthaltende Fraktion aus der Rohesterdestillation;

Stoffstrom 114,      eine überwiegend BME enthaltende Fraktion aus der sogenannten B-Ester-Aufbereitung;

Stoffstrom 184,      ein mit organischen Abfallprodukten beladenens Prozeßabwasser;

Energiestrom 222,      ca. 600 kg/h Dimethylether (DME), der destillativ aus dem methanolhaltigen Kopfprodukt der Hydrolyse gewonnen wird;

Energiestrom 224,      ca. 858 kg/h brennbare flüssige Rückstände aus der Rückstandsaufbereitung;

Energiestrom 226,      ca 760 kg/h Erdgas.

Der Abgasstrom 100 aus der p-X-Oxidation mit einer Temperatur von 158 °C, einem Druck von 7 bar und gesättigt mit den Stoffen gemäß Tabelle 1 wird über den Wärmeaustauscher 2 auf die Temperatur von 120 °C bei etwa gleichem Druck mit dem auszuschleusenden Abgasstrom 128 im Gegenstrom abgekühlt (Fig. 1).

Anschließend wird der abgekühlte Abgasstrom 101 mit den zugleich überwiegend kondensierten höhersiedenden Komponenten der Belastungsstoffe zur weiteren Auskühlung und Kondensation der restlichen höhersiedenden und teilweise der mittelsiedenden Komponenten der Wertprodukte und des Wassers dem mit Kühlwasser betriebenen Kondensator 4 zugeführt.

Die anfallende Flüssigphase 102 wird dem Kondensator 4 bei einer Temperatur von 40 °C entnommen und in einen Separator (nicht dargestellt) entspannt.

Das am Kondensator 4 austretende Abgasgemisch 104 wird bei einer Temperatur von 40 °C und mit einer Beladung von 1,25 Gew.-% p-X, 0,16 Gew.-% Methanol und 0,17 Gew.-% Leichtsieder dem Sumpf der ersten Absorptionsstufe der zweistufigen Absorptionswaschkolonne 3 zur Rückgewinnung des p-Xylols zugeführt.

Die p-TE-Fraktion 108 wird der im Gesamtprozeß aus der destillativen Auftrennung des Rohesters anfallenden p-TE-Fraktion, die in die Oxidation zurückgeführt wird, bei einer Temperatur von 140 °C entnommen (nicht dargestellt), mit der Druckerhöhungspumpe 6 auf den Druck von 7 bar gebracht, über den mit Kondensat betriebenen Kühler 8 auf eine Temperatur von 100 °C abgekühlt und als Lösungsmittel 110 am Kopf der ersten Absorptionsstufe der zweistufigen Absorptionswaschkolonne 3 zum Waschen des durchströmenden Abgasgemisches 104 im Gegenstrom aufgegeben.

Das am Kopf der ersten Absorptionsstufe bei einer Temperatur von 60 °C anfallende xylol-arme und mit p-TE angereicherte Abgasgemisch strömt direkt in den Sumpf der zweiten Stufe über. In dieser zweiten Stufe wird der Abgasstrom zur Rückgewinnung des p-TE's gewaschen und weiter abgekühlt.

Die BME-Fraktion 114 stammt im Gesamtprozeß aus der destillativen Auftrennung der sogenannten B-Ester-Fraktion, die hauptsächlich aus p-TE, BME, TAE sowie Methanol besteht. Die B-Ester-Fraktion wird aus der am Kopf der Rohester-Rektifikation anfallenden, hauptsächlich aus p-TE bestehenden Fraktion gewonnen. Die BME-Fraktion 114 weist eine Temperatur von 104 °C auf und wird mit der Druckerhöhungspumpe 10 auf den Druck von 7 bar gebracht und in den mit der Umwälzpumpe 9 betriebenen äußeren Kühlkreislauf der zweiten Stufe der zweistufigen Absorptionswaschkolonne 3 eingespeist und mit der am Sumpf der zweiten Stufe anfallenden Flüssigphase 112 bei einer Temperatur von 46 °C gemischt, wobei sich eine Temperatur von 46,5 °C (Stoffstrom 116) einstellt. Anschließend wird das umlaufende, überwiegend aus BME und p-TE bestehende Absorptionsmittel über den mit Kaltwasser betriebenen Kühler 11 auf eine Temperatur von 25 °C abgekühlt und als Kühl- und Lösungsmittel 118 im Gegenstrom zur weiteren Abkühlung und Kondensation der Wertprodukte des durchströmenden Abgasgemisches 104 am Kopf der zweiten Stufe zum Waschen aufgegeben.

Die am Sumpf der zweiten Stufe angesammelten Lösungsmittel mit den zurückgewonnenen Wertprodukten, bestehend hauptsächlich aus p-TE und teilweise aus Methanol und BME, fließen zu einem geringen Anteil im freien Ablauf in die erste Absorptionsstufe über und werden gemeinsam mit der am Sumpf anfallenden p-X-haltigen p-TE-Fraktion 106 der zweistufigen Absorptionskolonne 3 bei einer Temperatur von 48 °C entnommen und in den Vorratstank für die in die Oxidation zurückzuführende p-TE-Fraktion des Gesamtprozesses entspannt.

Das am Kopf der zweistufigen Absorptionswaschkolonne 3 austretende Abgasgemisch 120, mit einer Temperatur von 26 °C und mit einer Beladung von 0,12 Gew.-% Methanol und 0,14 Gew.-% Leichtsiedern, wird dem Sumpf der Absorptionskolonne 13 zur Rückgewinnung des Methanols zugeführt.

Das methanol-arme Prozeßabwasser 184 mit einer Temperatur von 40 °C wird mit der Druckerhöhungspumpe 15 auf den Druck von 7 bar gebracht, über den mit Kaltwasser betriebenen Kühler 17 auf eine Temperatur von 15 °C abgekühlt und als Lösungsmittel 126 am Kopf der Absorptionskolonne 13 zum Waschen im Gegenstrom des durchströmenden Abgasgemisches 120 aufgegeben.

Das am Sumpf bei einer Temperatur von 20 °C anfallende Methanol-Wasser-Gemisch 122 wird in einen Separator (nicht dargestellt) entspannt.

Das am Kopf der Absorptionskolonne 13 bei einer Temperatur von 15 °C austretende und von Wertprodukten befreite Abgasgemisch 128 mit einer Restbeladung von 0,28 Gew.-% an Leichtsiedern wird durch die Wärmeabgabe des Abgasstromes 100 über den Wärmeaustauscher 2 im Gegenstrom auf eine Temperatur von 131 °C (Stoffstrom 130) vorgewärmt und anschließend gemeinsam mit dem für die Nachverbrennung erforderlichen Luftsauerstoff 242 über den nachgeschalteten Wärmeaustauscher 48 (Fig. 2) mit dem auszuschleusenden und entsorgten Rauchgasstrom 236 im Gegenstrom auf eine Temperatur von 340 °C (Stoffstrom 230) aufgeheizt. Das aufgeheizte Abgas 230 wird in der Brennkammer 50 unter Zuführung von Brennstoff in Form von unter Druck anfallenden dampfförmigen und flüssigen Rückständen bestehend aus Dimethylether (DME) (Energiestrom 222) und DMT-Rückstand (Energiestrom 224) aus dem Prozeß und mit Erdgas (Energiestrom 226) als Zusatzbrennstoff bei einem Druck von 7 bar und einer Temperatur von 1000 °C unter Nutzung der im Abgasstrom 130 enthaltenen Verbrennungswärme ausgebrannt bzw. verbrannt.

Das dabei anfallende Rauchgas 232 wird über den Wärmeaustauscher 52 durch Aufheizung eines Wärmeträgers und/oder Erzeugung von Hochdruckdampf, die im Prozeß benötigt werden, auf eine Temperatur von 650 °C abgekühlt (Stoffstrom 234) und auf die Heißgasentspannungsturbine 54 gegeben.

In der Turbine 54 erfolgt eine Entspannung des Rauchgases auf den Druck von 1,05 bar und zugleich eine Abkühlung auf eine Temperatur von 380 °C.

Die dabei freiwerdende mechanische Energie wird direkt als Antriebsenergie an den auf der gleichen Welle laufenden Luftkompressor 56 abgegeben, der den Luftstrom 150 für die Oxidation mit einem Druck von 9 bar und mit einer Temperatur von 115 °C erzeugt und den Luftsauerstoff 242 für die Nachverbrennung des gleichzeitig freigesetzten Abgasgemisches 130 unter einem Druck von 7 bar bei einer Temperatur von 75 °C liefert.

Das bei der Zwischenkühlung während der Luftkompression durch die mit Kühlwasser betriebenen Kühler 27 anfallende Wasser 152 wird ausgeschleust.

Das entspannte und abgekühlte Rauchgas 236 aus der Heißgasturbine 54 wird zur weiteren Nutzung der Abwärme über den Wärmeaustauscher 48 im Gegenstrom mit dem zur Nachverbrennung bestimmten Gasstrom 228 auf eine Temperatur von 165 °C abgekühlt und in die Atmosphäre abgegeben.

Wie aus Tabelle 1, Stoffstrom 238, ersichtlich, enthält das gereinigte Abgas praktisch keine organischen Anteile und CO mehr und kann unbedenklich emittiert werden.

Für die Abgasreinigung werden nach Tab. 2 insgesamt 10 kW elektrische Energie und 18,81 MW an Brennstoffen benötigt (Energieströme 202, 206, 208, 212, 222-226). Im Gegenzug werden 11,1 MW für die Dampferzeugung und 8,672 MW für die Oxidator-Zuluft-Kompression genutzt (Stoffströme 204,228 und 230). Eine Bilanz der Anlage gemäß Fig. 1 und 2 ergibt eine Netto-Energie-Rückgewinnung von 980 kW aus dem Abgas.

Eine herkömmliche Abgasreinigung mit dreistufiger Kondensation und Aktivkohleadsorption erfordert ohne die zugehörigen Aufarbeitungsstufen einen Netto-Energie-Aufwand von 1,852 MW bei erheblich schlechterer Reinigungswirkung des Abgases. Somit ermöglicht das Verfahren gemäß diesem Ausführungsbeispiel neben der besseren Reinigung eine Energieeinsparung von ca. 2,8 MW.

**Beispiel 2**

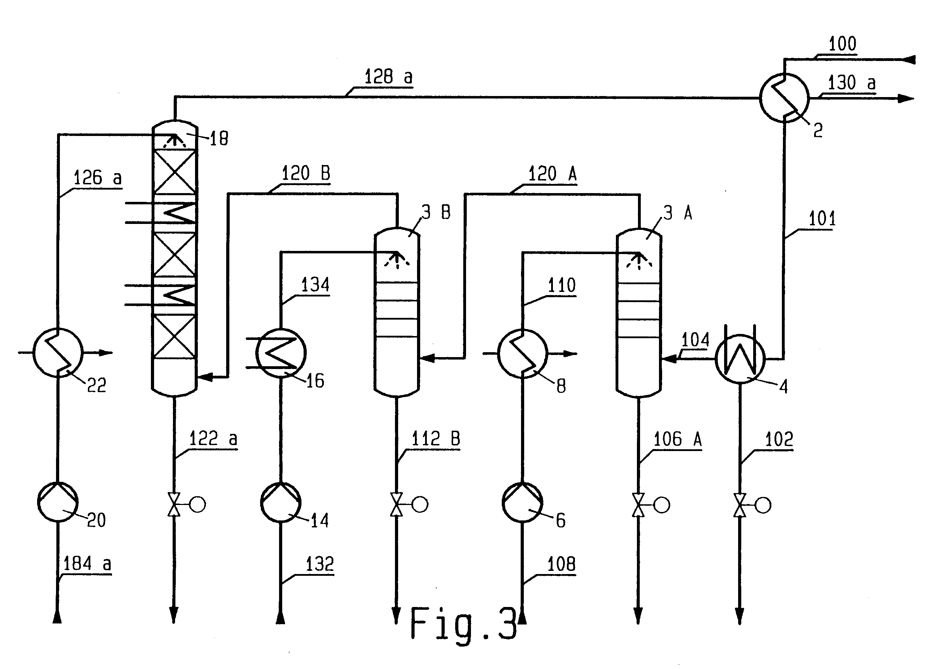

In Fig. 3 ist eine alternative Abgasreinigung dargestellt, die weitgehend der in Fig. 1 dargestellten Anlage entspricht. Nach Teilkondensation der Belastungsstoffe im Kühler 4 wird dem Abgas zunächst im Wäscher 3A mit einem Gemisch aus p-TE und BME das noch gelöste p-X entzogen. In der zweiten Desorption 3B wird mit Methanol 134 der in dem Abgasstrom gelöste BME und der p-TE ausgewaschen. Schließlich wird in der Waschkolonne 18 das im Abgas gelöste Methanol mit Wasser ausgewaschen.

Tabelle 1.1

| Stoffstrom Stoff | Einheit | 100 | 101 | 102 | 104 | 106 | 108 | 110 |
|---|---|---|---|---|---|---|---|---|
| Menge | [kg/h] | 93402 | 93402 | 24083 | 69319 | 6287 | 5000 | 5000 |
| Druck** | [bar] | 7 | 7 | 7 | 7 | 7 | 1,1 | 7 |
| Temperatur | [°C] | 158 | 120 | 40 | 40 | 48 | 140 | 100 |
| Wärmeinhalt* | [kW] | 10916 | 8365 | 638 | 569 | 167 | 362 | 259 |
| Hochsieder | [Gew.-%] | Spuren | Spuren | Spuren | | | | |
| DMT DMI DMO | [Gew.-%] | 0,21 | 0,21 | 0,81 | | 11,93 | 15,00 | 15,00 |
| MMT | [Gew.-%] | 0,02 | 0,02 | 0,08 | | | | |
| TPA | [Gew.-%] | Spuren | Spuren | Spuren | Spuren | 3,18 | 4,00 | 4,00 |
| TAE | [Gew.-%] | 0,03 | 0,03 | 0,12 | | 58,56 | 73,60 | 73,60 |
| p-TE | [Gew.-%] | 3,67 | 3,67 | 14,22 | | 0,32 | 0,40 | 0,40 |
| p-TA | [Gew.-%] | 0,21 | 0,21 | 0,81 | Spuren | 6,99 | 7,00 | 7,00 |
| BME | [Gew.-%] | 2,10 | 2,10 | 8,12 | | 13,72 | | |
| Xylole | [Gew.-%] | 12,35 | 12,35 | 44,34 | 1,25 | 0,15 | | |
| Methylacetat | [Gew.-%] | 0,11 | 0,11 | 0,25 | 0,06 | 0,02 | | |
| Metylformlat | [Gew.-%] | 0,05 | 0,05 | 0,08 | 0,04 | 0,15 | | |
| Essigsäure | [Gew.-%] | 0,42 | 0,42 | 1,59 | 0,01 | | | |
| DME | [Gew.-%] | | | | | | | |
| Ameisensäure | [Gew.-%] | 0,21 | 0,21 | 0,78 | 0,01 | 0,09 | | |
| Acetaldehyd | [Gew.-%] | 0,05 | 0,05 | 0,06 | 0,04 | Spuren | | |
| Methanol | [Gew.-%] | 0,65 | 0,65 | 2,06 | 0,16 | 0,50 | | |
| Kohlendioxid | [Gew.-%] | 1,50 | 1,50 | | 2,02 | | | |
| Sauerstoff | [Gew.-%] | 2,32 | 2,32 | | 3,13 | | | |
| Kohlenmonoxid | [Gew.-%] | 0,41 | 0,41 | | 0,55 | | | |
| Stickstoff | [Gew.-%] | 68,48 | 68,48 | | 92,27 | | | |
| Wasser | [Gew.-%] | 7,20 | 7,20 | 26,67 | 0,45 | 4,38 | | |
| $NO_x$ als $NO_2$ | [Gew.-%] | | 7,20 | | | | | |

Bemerkung: Spuren gleich <0,01 Gew.-%

* Bezugstemperatur 0 °C   ** 1 bar = $10^5$ Pa

Tabelle 1.2

| Stoffstrom Stoff | Einheit | 112 | 114 | 116 | 118 | 120 | 122 | 126 |
|---|---|---|---|---|---|---|---|---|
| Menge | [kg/h] | 76833 | 100 | 76933 | 76933 | 68132 | 9392 | 9500 |
| Druck ** | [bar] | 7 | 1,1 | 7 | 7 | 7 | 7 | 7 |
| Temperatur * | [°C] | 46 | 104 | 46,5 | 25 | 26 | 20 | 15 |
| Wärmeinhalt * | [kW] | 2041 | 6 | 2290 | 1758 | 540 | 205 | 162 |
| Hochsieder DMT DMI DMO | [Gew.-%] | 0,32 | | 0,32 | 0,32 | | | |
| MMT | [Gew.-%] | | | | | | | |
| TPA | [Gew.-%] | | | | | | | |
| TAE | [Gew.-%] | | | | | Spuren | | |
| p-TE | [Gew.-%] | 0,26 | | 0,26 | 0,26 | 0,02 | | |
| p-TA | [Gew.-%] | 37,83 | | 37,78 | 37,78 | Spuren | | |
| BME | [Gew.-%] | 0,01 | | 0,01 | 0,01 | 0,05 | | |
| Xylole | [Gew.-%] | 57,90 | 98,00 | 57,95 | 57,95 | 0,04 | | |
| Methylacetat | [Gew.-%] | 0,11 | | 0,11 | 0,11 | Spuren | | Spuren |
| Metylformlat | [Gew.-%] | 0,25 | | 0,25 | 0,25 | | | |
| Essigsäure | [Gew.-%] | 0,07 | | 0,07 | 0,07 | | 1,55 | 2,22 |
| DME | [Gew.-%] | 0,01 | | 0,01 | 0,01 | | | |
| Ameisensäure | [Gew.-%] | 0,08 | | 0,08 | 0,08 | Spuren | 0,78 | 1,10 |
| Acetaldehyd | [Gew.-%] | 0,05 | | 0,05 | 0,05 | 0,05 | | |
| Methanol | [Gew.-%] | 0,83 | 2,00 | 0,83 | 0,83 | 0,11 | 0,86 | 0,05 |
| Kohlendioxid | [Gew.-%] | | | | | 2,05 | | |
| Sauerstoff | [Gew.-%] | | | | | 3,18 | | |
| Kohlenmonoxid | [Gew.-%] | | | | | 0,56 | | |
| Stickstoff | [Gew.-%] | | | | | 93,88 | | |
| Wasser | [Gew.-%] | 2,28 | | 2,28 | 2,28 | | 96,81 | 96,62 |
| NOx als NO2 | [Gew.-%] | | | | | 0,05 | | |

Bemerkung:   Spuren gleich <0,01 Gew.-%

\* Bezugstemperatur 0 °C        ** 1 bar = $10^5$ Pa

8

Tabelle 1.3

| Stoffstrom / Stoff | Einheit | 128 | 130 | 150 | 152 | 184 | 228 | 230 |
|---|---|---|---|---|---|---|---|---|
| Menge | [kg/h] | 68240 | 68240 | 83535 | 443 | 9500 | 95150 | 95150 |
| Druck ** | [bar] | 7 | 7 | 9 | 1,1 | 1,1 | 7 | 7 |
| Temperatur | [°C] | 15 | 131 | 115 | 25 | 40 | 123 | 340 |
| Wärmeinhalt* | [kW] | 497 | 2761 | 2750 | 13 | 440 | 3329 | 9750 |
| Hochsieder | [Gew.-%] | | | | | | | |
| DMT DMI DMO | [Gew.-%] | | | | | | | |
| MMT | [Gew.-%] | | | | | | | |
| TPA | [Gew.-%] | | | | | | | |
| TAE | [Gew.-%] | | | | | | | |
| p-TE | [Gew.-%] | Spuren | Spuren | | | | Spuren | Spuren |
| p-TA | [Gew.-%] | | | | | | | |
| BME | [Gew.-%] | 0,02 | 0,02 | | | | 0,01 | 0,01 |
| Xylole | [Gew.-%] | Spuren | Spuren | | | Spuren | Spuren | Spuren |
| Methylacetat | [Gew.-%] | 0,05 | 0,05 | | | | 0,04 | 0,04 |
| Metylformiat | [Gew.-%] | 0,03 | 0,03 | | | | 0,03 | 0,03 |
| Essigsäure | [Gew.-%] | 0,10 | 0,10 | | | 2,22 | 0,07 | 0,07 |
| DME | [Gew.-%] | | | | | | | |
| Ameisensäure | [Gew.-%] | 0,05 | 0,05 | | | 1,10 | 0,03 | 0,03 |
| Acetaldehyd | [Gew.-%] | 0,05 | 0,05 | | | | 0,03 | 0,03 |
| Methanol | [Gew.-%] | Spuren | Spuren | | | 0,05 | Spuren | Spuren |
| Kohlendioxid | [Gew.-%] | 2,05 | 2,05 | | | | 1,47 | 1,47 |
| Sauerstoff | [Gew.-%] | 3,17 | 3,17 | 23,13 | | | 8,79 | 8,79 |
| Kohlenmonoxid | [Gew.-%] | 0,56 | 0,56 | | | | 0,40 | 0,40 |
| Stickstoff | [Gew.-%] | 93,73 | 93,73 | 76,57 | | | 88,80 | 88,80 |
| Wasser | [Gew.-%] | 0,17 | 0,17 | 0,30 | 100,00 | 96,62 | 0,32 | 0,32 |
| $NO_x$ als $NO_2$ | [Gew.-%] | | | | | | | |

Bemerkung: Spuren gleich <0,01 Gew.-%

* Bezugstemperatur 0 °C     ** 1 bar = $10^5$ Pa

EP 0 544 729 B1

Tabelle 1.4

| Stoffstrom Stoff | Einheit | 232 | 234 | 236 | 238 | 240 | 242 |
|---|---|---|---|---|---|---|---|
| Menge | [kg/h] | 97368 | 97368 | 97368 | 97368 | 110888 | 26910 |
| Druck ** | [bar] | 7 | 7 | 1,05 | 1,05 | 1,1 | 7 |
| Temperatur * | [°C] | 1000 | 650 | 380 | 165 | 15 | 75 |
| Wärmeinhalt* | [kW] | 30675 | 19650 | 10978 | 4517 | 787 | 568 |
| Hochsieder | [Gew.-%] | | | | | | |
| DMT DMI DMO | [Gew.-%] | | | | | | |
| MMT | [Gew.-%] | | | | | | |
| TPA | [Gew.-%] | | | | | | |
| TAE | [Gew.-%] | | | | | | |
| p-TE | [Gew.-%] | | | | | | |
| p-TA | [Gew.-%] | | | | | | |
| BME | [Gew.-%] | | | | | | |
| Xylole | [Gew.-%] | | | | | | |
| Methylacetat | [Gew.-%] | | | | | | |
| Metylformiat | [Gew.-%] | | | | | | |
| Essigsäure | [Gew.-%] | | | | | | |
| DME | [Gew.-%] | | | | | | |
| Ameisensäure | [Gew.-%] | | | | | | |
| Acetaldehyd | [Gew.-%] | | | | | | |
| Methanol | [Gew.-%] | | | | | | |
| Kohlendioxid | [Gew.-%] | 8,09 | 8,09 | 8,09 | 8,09 | | |
| Sauerstoff | [Gew.-%] | 2,51 | 2,51 | 2,51 | 2,51 | 23,04 | 23,04 |
| Kohlenmonoxid | [Gew.-%] | | | | | | |
| Stickstoff | [Gew.-%] | 86,77 | 86,77 | 86,77 | 86,77 | 76,27 | 76,56 |
| Wasser | [Gew.-%] | 2,63 | 2,63 | 2,63 | 2,63 | 0,69 | 0,40 |
| $NO_x$ als $NO_2$ | [Gew.-%] | Spuren | Spuren | Spuren | Spuren | | |

Bemerkung:     Spuren gleich <0,01 Gew.-%

*  Bezugstemperatur 0 °C          **   1 bar = $10^5$Pa

EP 0 544 729 B1

TABELLE 2

| Energie-Strom | Einsatz | Energieeinsatz und -verteilung[kW] | | | |
|---|---|---|---|---|---|
| | | Dampf | Brennstoff | elektr. Energie | Abwärme |
| 200 | Kondensator 4 | | | | 7158 |
| 202 | Pumpe 6 | | | 2 | |
| 204 | Kühler 8 | -103 | | | |
| 206 | Pumpe 9 | | | 3 | |
| 208 | Pumpe 10 | | | 1 | |
| 210 | Kühler 11 | | | | 289 |
| 212 | Pumpe 15 | | | 4 | |
| 214 | Kühler 17 | | | | 278 |
| 221 | Zwischenkühler 27 | | | | 6128 |
| 222 | Verbrennungswärme DME | | 4940 | | |
| 224 | Verbrennungswärme DMT-Rückstand | | 8150 | | |
| 226 | Verbrennungswärme Erdgas | | 5720 | | |
| 228 | Wärmeaustauscher52 | -11025 | | | |
| 230 | Heißgasturbine 54 | | | -8672 | |
| 232 | Luftkompressor 56 | | | 8672 | |
| Bezugstemperatur 0 °C | | | | | |

## Abkürzungen

DME     - Dimethylether
DMI     - Dimethylisophthalat
DMO     - Dimethylorthophthalat
DMT     - Dimethylterephthalat
MMT     - Monomethylterephthalat
p-TA     - para-Toluylsäure
p-TE     - para-Toluylsäure-methylester (pT-Ester)
p-X     - para-Xylol
TPA     - Terephthalsäure
TAE     - Terephthalaldehydsäure-methylester
BME     - Benzoesäuremethylester

Hochsieder sind nicht näher bezeichnete organische Substanzen mit höheren Siedepunkten als die oben angegebenen Stoffe.

## Patentansprüche

1. Verfahren zur Reinigung eines aus einer Luftoxidation von Xylol stammenden, unter einem Druck von 5 bis 50 bar stehenden, zumindest mit Xylol belasteten Abgases (100), umfassend eine Abgaswäsche, **dadurch gekennzeichnet**, daß in der Abgaswäsche unter Druck zumindest das Xylol durch Absorption mit einem Ester oder Estergemisch (110) entfernt wird, wobei der Ester bzw. das Estergemisch (110) einen höheren Siedepunkt als das Xylol aufweist.

2. Verfahren nach Anspruch 1, **dadurch gekennzeichnet**, daß der Ester bzw. das Estergemisch (110) aus einem der Luftoxidation des Xylols nachgeschalteten Verfahrensschritt stammt.

3. Verfahren nach Ansprüche 1 oder 2, **dadurch gekennzeichnet**, daß als Ester (110) ein para-Toluylsäuremethylester (p-TE) oder ein Gemisch aus p-TE und Benzoesäuremethylester (BME) verwendet wird.

4. Verfahren nach einem der Ansprüche 1 bis 3, **dadurch gekennzeichnet**, daß das Abgas (100) nach Abkühlung und teilweiser Kondensation der im Abgas (100) enthaltenen organischen Substanzen in einer ersten Absorptionsstufe mit p-TE oder einem p-TE/BME-Gemisch, in einer zweiten Absorptionsstufe mit BME oder Methanol und in einer dritten Absorptionsstufe (13) mit Wasser (126) gereinigt wird.

5. Verfahren nach Anspruch 4, *dadurch gekennzeichnet*, daß als Waschwasser (126) in der letzten Absorptionsstufe (13) ein mit organischen Abfallprodukten beladenes Abwasser eingesetzt wird.

6. Verfahren nach einem der Ansprüche 1 bis 5, *dadurch gekennzeichnet*, daß der absorptiv gereinigte Abgasstrom (130), gegebenenfalls nach Zwischenerwärmung, mit einem leichtsiedende organische Abfallprodukte enthaltenden Prozeßabwasser gesättigt wird.

7. Verfahren nach einem der Ansprüche 1 bis 6, *dadurch gekennzeichnet*, daß die nach der absorptiven Reinigung noch im Abgas (100) befindlichen oxidierbaren Stoffe unter Druck verbrannt und daß die Rauchgase in einer Entspannungsturbine (54) zur Erzeugung von Energie genutzt werden.

**Claims**

1. Process for the purification of a waste gas (100) originating from an air oxidation of xylene standing under a pressure of 5 to 50 bar, polluted at least with xylene, comprising a waste gas wash, **characterized in that** at least the xylene is removed by absorption with an ester or ester mixture (110) in the waste gas wash under pressure, whereby the ester or the ester mixture (110) has a higher boiling point than the xylene.

2. Process according to claim 1, **characterized in that** the ester or the ester mixture (110) originates from a process step downstream from the air oxidation of the xylene.

3. Process according to claims 1 or 2, **characterized in that** a para-toluic acid methyl ester (p-TE) or a mixture comprising p-TE and benzoic acid methyl ester (BME) is used as ester (110).

4. Process according to one of claims 1 to 3, characterized in that the waste gas (100), after cooling and partial condensation of the organic substances contained in the waste gas (100), is purified in a first absorption stage with p-TE or a p-TE/BME mixture, in a second absorption stage with BME or methanol and in a third absorption stage (13) with water (126).

5. Process according to claim 4, **characterized in that** a waste water polluted with organic waste products is used as wash water (126) in the last absorption stage (13).

6. Process according to one of claims 1 to 5, **characterized in that** the absorptively-purified waste gas stream (130), optionally after intermediate heating, is saturated with a process waste water containing low-boiling organic waste products.

7. Process according to one of claims 1 to 6, **characterized in that** the oxidizable substances still present in the waste gas (100) following the absorptive purification are burned under pressure, and in that the flue gases are used in an expansion turbine (54) for the production of energy.

**Revendications**

1. Procédé de purification du gaz de combustion (100) chargé au moins avec du xylène, provenant d'une oxydation à l'air du xylène et se présentant sous une pression de 5 à 50 bars incluant un lavage de gaz de combustion, caractérisé en ce que dans le lavage des gaz de combustion sous pression, au moins le xylène est éliminé par absorption avec un ester ou un mélange d'esters (110), procédé dans lequel l'ester ou le mélange d'esters (110) possède un point d'ébullition plus élevé que celui du xylène.

2. Procédé selon la revendication 1 caractérisé en ce que l'ester ou le mélange d'esters (110) provient d'une étape de procédé connectée ultérieurement à une oxydation à l'air.

3. Procédé selon les revendications 1 ou 2 caractérisé en ce que l'on utilise comme ester (110) un ester méthylique de l'acide para-toluylique (p-TE) ou un mélange à base de pTE et d'ester méthylique d'acide benzoïque (BME).

**4.** Procédé selon l'une des revendications 1 à 3 caractérisé en ce que les gaz de combustion (100) sont purifiés après refroidissement et condensation partielle des substances organiques contenues dans les gaz de combustion (100) dans une première étape d'absorption avec p-TE ou un mélange pTE/BME, dans une seconde étape d'absorption avec BME ou le méthanol et dans une troisième étape d'absorption (13), avec de l'eau (126).

**5.** Procédé selon la revendication 4 caractérisé en ce que l'on met en oeuvre comme eau de lavage (126) dans la dernière étape d'absorption (13), des eaux usées chargée de sous-produits organiques de rebut (ou produits de récupération).

**6.** Procédé selon l'une des revendications 1 à 5 caractérisée en ce que le courant de gaz de combustion purifié par absorption (130) est saturé - le cas échéant après échauffement intermédiaire - avec des eaux usées du procédé contenant des sous-produits de rebut, organiques, à bas point d'ébullition (ou produits de récupération).

**7.** Procédé selon l'une des revendications 1 à 6 caractérisé en ce que les substances oxydables qui se trouvent encore dans les gaz de combustion (100) après la purification par absorption, sont brûlées sous pression et que les gaz de combustion sont utilisés dans une turbine de détente (54) pour la production d'énergie.

Fig.1

EP 0 544 729 B1

EP 0 544 729 B1

Fig.2

15

Fig.3

EP 0 544 729 B1